# FASCICULE DE BREVET EUROPEEN

(11) **EP 3 116 319 B1**
(45) Date de publication et mention de la délivrance du brevet: **06.11.2019**
(21) Numéro de dépôt: 15714585.5
(22) Date de dépôt: 06.03.2015
(51) Int. Cl.: A01N 41/10, A01N 65/08, A01N 65/00, A01N 65/34

(54) **PROCEDE DE VALORISATION DE FEUILLES CADUQUES DE PLANTE LIGNEUSE A PORT ARBORESCENT POUR L'INDUSTRIE PHYTOPHARMACEUTIQUE**
VERFAHREN ZUR WIEDERVERWENDUNG VON SOMMERGRÜNEN BLÄTTERN AUS EINER BAUMARTIGEN HÖLZERNEN PFLANZE FÜR DIE PHYTOPHARMABRANCHE
METHOD FOR REUSING DECIDUOUS LEAVES, FROM AN ARBORESCENT LIGNEOUS PLANT, FOR THE PHYTOPHARMACEUTICAL INDUSTRY

(30) Priorité: 13.03.2014 FR 1452112
(43) Date de publication de la demande: 18.01.2017
(73) Titulaire: Agro Innovation International, 35400 Saint-Malo (FR)
(72) Inventeur: GOUPIL, Pascale, F-63170 Perignat-les-Sarlieve (FR); RICHARD, Claire, F-63110 Beaumont (FR); TER HALLE, Alexandra, F- 31450 Baziege (FR)
(74) Mandataire: Hubert, Philippe
(86) Numéro de dépôt international: PCT/FR2015/050561
(87) Numéro de publication internationale: WO 2015/136195

(56) Documents cités:
- WO-A1-03/079794
- FR-A1- 2 526 632
- US-A1- 2006 073 220
- US-A1- 2010 016 161
- Nicolas Aveline: "Les Entretiens Viti-Vinicoles Rhône Méditerranée 2009 3 Réduction des intrants : quelles alternatives ? Produits alternatifs et SDN pour protéger la vigne", , 1 janvier 2009 (2009-01-01), XP055149510, Extrait de l'Internet: URL:http://www.vignevin-lr.com/fileadmin/u sers/ifv-lr/Recherche_et_Experimentation_h rt/Vigne/ProduitsAlternatifsSDN.pdf [extrait le 2014-10-28]
- P.-Y. Chao: "Inhibitive Effects of Mulberry Leaf-Related Extracts on Cell Adhesion and Inflammatory Response in Human Aortic Endothelial Cells", , 1 January 2013 (2013-01-01), XP055414850, Retrieved from the Internet: URL:https://www.hindawi.com/journals/ecam/ 2013/267217/ [retrieved on 2017-10-11]

## Description

### Domaine de l'invention

La présente invention concerne un procédé de valorisation de feuilles caduques de plante ligneuse à port arborescent pour l'industrie phytopharmaceutique.

### Contexte de l'invention

Près de 10% de la surface de la planète sont recouverts de plantes ligneuses à port arborescent. Une plante ligneuse à port arborescent produit, en moyenne, près de 300 kg de feuilles par an. Cette biomasse est à la fois abondante, facilement accessible mais peu utilisée. En effet, après abscission, les feuilles caduques de plante ligneuse à port arborescent ne sont que très rarement récoltées et finissent par pourrir. Celles qui sont récoltées sont transformées en compost, incinérées, ou enfouies. Dans tous les cas, cette abondante biomasse est à l'origine d'un important dégagement de gaz à effet de serre tels que le dioxyde de carbone et le méthane.

US 2010/0016161 concerne des formulations phytosanitaires qui comprennent au moins un ingrédient actif et au moins un extrait alcoolique, hydroalcoolique ou aqueux d'au moins une plante tinctoriale. Ces formulations phytosanitaires peuvent être utilisées dans le domaine de l'agriculture et de l'horticulture, en particulier.

Il serait donc utile de développer un procédé de valorisation de feuilles caduques de plante ligneuse à port arborescent qui permette de les recycler et de limiter leur impact sur l'environnement.

De façon surprenante, la Demanderesse a trouvé un moyen de recycler cette abondante biomasse non utilisée actuellement, et de la valoriser en améliorant naturellement la santé d'autres plantes, mettant ainsi en place un cercle vertueux. En effet, elle a trouvé qu'un extrait de feuilles caduques de plante ligneuse à port arborescent présentait des propriétés telles qu'il pouvait être utilisé, seul ou en mélange avec un produit phytosanitaire, pour une application phytosanitaire.

Au sens de la présente invention, un produit phytosanitaire est défini comme étant un produit destiné à protéger les végétaux contre tous les organismes nuisibles ou à prévenir l'action de ces derniers. Par exemple, les pesticides, les herbicides, les fongicides, les insecticides, les molluscicides sont des produits phytosanitaires au sens de la présente invention.

Ainsi, l'invention a pour objet, selon un premier aspect, un procédé de valorisation de feuilles caduques de plante ligneuse à port arborescent comprenant les étapes de :
a) collecte des feuilles caduques de plante ligneuse à port arborescent, ladite plante ligneuse à port arborescent étant choisie dans le groupe consistant en l'acacia, le bouleau, le charme, le châtaignier, le chêne, l'érable, le frêne, le hêtre, le marronnier, le platane, le prunus, le saule, le sophora, et le peuplier,
b) extraction desdites feuilles par un solvant aqueux consistant en de l'eau bisulfitée dont la teneur en bisulfite est comprise entre 0,5 g/l et 2 g/l, ou un solvant hydroalcoolique comprenant plus de 25 % (v/v) d'éthanol, ledit solvant pouvant en outre contenir un acide en une teneur inférieure à 2,5 % (v/v), et
c) utilisation dudit extrait pour une application phytosanitaire consistant en l'élicitation d'une plante, ou le traitement préventif ou curatif d'une plante contre un agent pathogène.

Selon un second aspect, l'invention a également pour objet, une utilisation d'un extrait de feuilles caduques de plante ligneuse à port arborescent pour une application phytosanitaire.

Selon un troisième aspect, l'invention a également pour objet, un procédé phytosanitaire, qui comprend l'application d'une composition comprenant un extrait de feuilles caduques de plante ligneuse à port arborescent sur une plante.

### Description détaillée de l'invention

Selon un premier aspect, la présente invention porte sur un procédé de valorisation de feuilles caduques de plante ligneuse à port arborescent comprenant généralement les étapes de :
a) collecte des feuilles caduques de plante ligneuse à port arborescent,
b) Extraction desdites feuilles par un solvant, et
c) Utilisation dudit extrait pour une application phytosanitaire.

Une plante ligneuse à port arborescent est une plante pérenne qui fabrique des tissus secondaires durs appelés xylème II ou BOIS et qui prend la forme d'un arbre. La large répartition géographique des feuilles caduques de plante ligneuse à port arborescent en fait une matière première abondante, facilement disponible et aisément accessible, surtout en période automnale.

Selon l'invention, la plante ligneuse à port arborescent est choisie dans le groupe consistant en l'acacia, le bouleau, le charme, le châtaignier, le chêne, l'érable, le frêne, le hêtre, le marronnier, le platane, le prunus, le saule, le sophora, le peuplier et leur mélange, et plus préférentiellement choisie dans le groupe consistant en l'érable, le prunus, le platane, le chêne et leurs mélanges.

De façon avantageuse, le procédé selon l'invention permet de recycler et de valoriser l'abondante biomasse représentée par les feuilles caduques de plante ligneuse à port arborescent. Le procédé selon l'invention permet également de réduire la production de gaz à effet de serre par cette abondante biomasse non utilisée. De façon avantageuse, le procédé selon l'invention limite donc l'impact environnemental de cette abondante biomasse non utilisée.

Le procédé selon l'invention comprend, avant l'étape d'extraction, une étape de collecte des feuilles caduques de plante ligneuse à port arborescent. Cette étape de collecte peut être dissociée dans l'espace et dans le temps des autres étapes du procédé. L'étape de collecte peut se faire avant ou après abscission.

Après collecte, les feuilles caduques de plante ligneuse à port arborescent peuvent subir un prétraitement physique, par exemple, de découpe, de déchiquetage, de pulvérisation. De façon avantageuse, ce prétraitement physique permet d'augmenter le rendement de l'étape a) d'extraction du procédé de valorisation selon l'invention. Elles ne subissent pas de fermentation ou compostage.

Selon un mode de réalisation, les feuilles caduques de plante ligneuse à port arborescent ne subissent pas de décoction, de macération et d'infusion.

Selon l'invention, l'étape b) d'extraction est réalisée à l'aide d'un solvant qui peut être :
- un solvant aqueux consistant en de l'eau bisulfitée dont la teneur en bisulfite peut être comprise entre 0,5 g/l et 2 g/l, de préférence entre 0,75 g/l et 1,5 g/l, plus préférentiellement est d'environ 1 g/l. Le bisulfite permet d'améliorer la solubilisation de l'extrait de feuilles caduques de plante ligneuse à port arborescent et d'éviter son oxydation,
- un solvant hydroalcoolique comprenant de l'eau et de l'éthanol en une quantité de plus de 25% (v/v), de préférence plus de 50% (v/v), encore plus préférentiellement plus de 75% (v/v).

Le solvant peut également être légèrement acidifié par ajout d'un acide. De façon avantageuse un solvant légèrement acidifié stabilise l'extrait de feuilles caduques de plante ligneuse à port arborescent. La teneur en acide dans le solvant est alors inférieure à 2,5% (v/v) d'acide, de préférence inférieure à 1% (v/v) d'acide. L'acide est avantageusement choisi dans le groupe consistant en l'acide chlorhydrique, l'acide nitrique, l'acide sulfurique, l'acide acétique et leur mélange.

Selon un mode réalisation préféré, le solvant hydroalcoolique comprend 80% (v/v) d'éthanol et 0,5% (v/v) d'acide chlorhydrique à 0.1N.

Selon un mode de réalisation, l'étape b) d'extraction est réalisée à la température ambiante, c'est-à-dire d'environ 18°C à environ 25°C.

Selon un mode de réalisation, l'étape b) d'extraction est réalisée une seule fois.

Selon un mode de réalisation, l'étape b) d'extraction est réalisée plusieurs fois en recyclant le solvant et/ou les feuilles caduques de plante ligneuse à port arborescent afin d'améliorer le rendement de l'étape a) d'extraction.

L'extrait de feuilles caduques de plante ligneuse à port arborescent obtenu à l'étape b) présente une activité élicitrice. Il permet ainsi de stimuler les défenses naturelles d'une plante sur laquelle il a été appliqué au préalable. L'extrait présente également une activité biocide lui permettant de traiter, préventivement ou curativement, une plante contre un pathogène sur laquelle il a été appliqué au préalable. Enfin, l'extrait peut être utilisé avec un produit phytosanitaire afin d'en améliorer les performances. L'extrait permet ainsi de diminuer la quantité de produit phytosanitaire utilisée et de limiter leur accumulation dans les plantes et ainsi le danger qu'ils peuvent présenter pour l'environnement, l'homme et l'animal. Compte tenu des propriétés de l'extrait de feuilles caduques de plante ligneuse à port arborescent décrites précédemment, l'application phytosanitaire consiste en l'élicitation d'une plante, ou le traitement préventif ou curatif d'une plante contre un agent pathogène.

L'extrait de feuilles caduques de plante ligneuse à port arborescent comprend des composés faciles à extraire et hydrosolubles, ils sont donc faciles d'emploi (dilution aisée dans une composition, par exemple). Les composés, synthétisés par une plante ligneuse à port arborescent, sont naturels, ce qui permet l'utilisation de l'extrait en agriculture biologique. Ces composés sont notamment des polyphénols et des anthocyanes.

Selon un mode de réalisation, l'extrait de feuilles caduques de plante ligneuse à port arborescent comprend moins de 45% en poids de polyphénols par rapport au poids sec de l'extrait. De préférence, l'extrait comprend entre 5 % en poids et 40 % en poids de polyphénols par rapport au poids sec de l'extrait.

L'extrait de feuilles caduques de plante ligneuse à port arborescent peut également comprendre moins de 2% en poids d'anthocyanes par rapport au poids sec de l'extrait. De préférence, l'extrait comprend moins de 1,1 % en poids d'anthocyanes par rapport au poids sec de l'extrait.

Le procédé de valorisation selon l'invention est tout à fait approprié pour une application phytosanitaire sur des plantes choisies dans le groupe consistant en les plantes agronomiquement utiles, les plantes aromatiques et les plantes ornementales. Les plantes agronomiquement utiles et plantes aromatiques sont choisies dans le groupe consistant en les Angiospermes comprenant les Alliacées, les Apiacées, les Astéracées, les Brassicacées, les Chénopodiacées, les Convolvulacées, les Cucurbitacées, les Fabacées, les Lamiacées, les Liliacées, les Polygonacées, les Rosacées, les Solanacées, les Poacées, les Vitacées.

Une seule application de l'extrait avant l'attaque d'un agent pathogène peut suffire pour obtenir l'application phytosanitaire souhaitée. Cependant, les modalités d'application dépendent bien entendu de l'espèce de plantes à traiter, et de son stade de développement, par conséquent il peut s'avérer parfois nécessaire d'appliquer l'extrait au moins une nouvelle fois plusieurs jours ou plusieurs semaines après la première réalisation.

Selon un second aspect, la présente invention porte sur l'utilisation d'un extrait de feuilles caduques de plante ligneuse à port arborescent pour une application phytosanitaire.

L'extrait de feuilles caduques de plante ligneuse à port arborescent est avantageusement obtenu selon le procédé décrit précédemment.

Selon l'invention, l'application phytosanitaire consiste en l'élicitation d'une plante, ou le traitement préventif ou curatif d'une plante contre un agent pathogène.

L'utilisation selon l'invention peut être mise en œuvre sur des plantes agronomiquement utiles et les plantes ornementales. De telles plantes sont celles mentionnées ci-dessus en lien avec le procédé de valorisation.

Selon un troisième aspect, la présente invention porte également sur un procédé de traitement phytosanitaire d'une plante, qui comprend l'application d'une composition comprenant un extrait de feuilles caduques de plante ligneuse à port arborescent sur ladite plante.

La composition mise en œuvre dans le procédé de traitement phytosanitaire selon l'invention comprend, comme produit actif, un extrait de feuilles caduques de plante ligneuse à port arborescent. L'extrait de feuilles caduques de plante ligneuse à port arborescent est avantageusement obtenu selon le procédé décrit précédemment.

La composition mise en œuvre dans le procédé de traitement phytosanitaire selon l'invention peut se présenter sous forme liquide ou sous forme de poudre.

Lorsque la composition se présente sous forme de poudre, elle est dépourvue de tout autre agent actif.

Avant son ajout dans la composition, l'extrait de feuilles caduques de plante ligneuse à port arborescent peut être sous forme liquide ou sous forme de poudre.

Lorsque l'extrait de feuilles caduques de plante ligneuse à port arborescent est sous forme liquide, il peut être aqueux, alcoolique ou hydroalcoolique, de préférence l'extrait est hydroalcoolique.

Lorsque l'extrait de feuilles caduques de plante ligneuse à port arborescent est sous forme de poudre, il est obtenu suite à une étape de séparation du solvant décrit précédemment en lien avec l'étape a) du procédé de valorisation. De façon avantageuse, la séparation ne dégrade pas les composés présents dans l'extrait de feuilles caduques de plante ligneuse à port arborescent et n'en modifie pas la teneur. Cette séparation est réalisée par un traitement choisi dans le groupe consistant en le séchage, la lyophilisation, l'atomisation, l'évaporation, de préférence la lyophilisation.

Selon un mode de réalisation du procédé de traitement selon l'invention, la composition est sous forme liquide et est appliquée par infiltration ou par pulvérisation foliaire.

La concentration d'extrait de feuilles caduques de plante ligneuse à port arborescent dans la composition mise en œuvre dans le procédé phytosanitaire selon l'invention est comprise entre 0,001 et 5%, de préférence entre 0,005 et 2,5%, plus préférentiellement encore entre 0,01% et 1,25%, par rapport au poids sec de l'extrait.

Pour une application par infiltration, la concentration d'extrait de feuilles caduques de plante ligneuse à port arborescent dans une composition mise en œuvre dans le procédé phytosanitaire selon l'invention est comprise entre 0,1 et 5%, de préférence entre 0,25 et 2,5%, plus préférentiellement encore entre 0,75% et 1,25%, par rapport au poids sec de l'extrait. Cette composition est particulièrement utile pour l'élicitation d'une plante et le traitement, curatif ou préventif, d'une plante contre un pathogène.

Pour une application par pulvérisation foliaire, la concentration d'extrait de feuilles caduques de plante ligneuse à port arborescent dans une composition mise en œuvre dans le procédé phytosanitaire selon l'invention est comprise entre 0,001 et 2%, de préférence entre 0,005 et 1%, plus préférentiellement encore entre 0,01% et 0,05%, par rapport au poids sec de l'extrait, pour une application par pulvérisation foliaire.

Une seule application de la composition avant l'attaque d'un agent pathogène peut suffire. Cependant, il peut s'avérer parfois nécessaire de faire au moins une nouvelle application plusieurs jours ou plusieurs semaines après la première.

La composition est appliquée à raison de 0,1 kg/ha à 2 kg/ha, de préférence de 0,3 kg/ha à 1,5 kg/ha de plantes à traiter.

Les doses d'application et les modalités d'application dépendent bien entendu de l'espèce de plantes à traiter, et de son stade de développement.

Le procédé de traitement phytosanitaire selon l'invention peut être mis en œuvre sur des plantes agronomiquement utiles, les plantes aromatiques et les plantes ornementales. De telles plantes sont celles mentionnées ci-dessus en lien avec le procédé de valorisation.

L'infiltration d'un extrait de feuilles caduques de plante ligneuse à port arborescent sur des feuilles de tabac et des feuilles de tomates, induit une réponse d'hypersensibilité (locale) accompagnée d'une réponse de résistance systémique (SAR : Systemic Acquired Résistance), traduisant l'effet éliciteur de l'extrait, effet caractéristique de l'induction d'une immunité vis-à-vis de pathogènes. L'effet éliciteur sur des feuilles de tabac a été démontré au niveau moléculaire par l'analyse de l'expression de gènes marqueurs de la réponse SAR c'est-à-dire des gènes codant les protéines de la pathogenèse (PR protéines) avec PR1 (antimicrobien), PR2 (glucanase), PR3 (chitinase) et le gène PAL (Phenyl Alanine Ammonia Lyase) codant une enzyme impliquée dans la synthèse des phénylpropanoïdes (composés phénoliques).

L'infiltration d'une composition comprenant un extrait de feuilles caduques de plante ligneuse à port arborescent sur des feuilles de tabac permet de réduire des infections causées par des agents pathogènes sur ces mêmes feuilles de tabac.

La pulvérisation de compositions comprenant d'un extrait de feuilles caduques de plante ligneuse à port arborescent mélangé à un pesticide permet de réduire la cinétique de photo-dégradation dudit pesticide par le rayonnement solaire.

L'invention va être décrite de façon plus détaillée ci-dessous à l'aide des exemples suivants qui sont donnés à titre d'illustration uniquement.

### Exemples

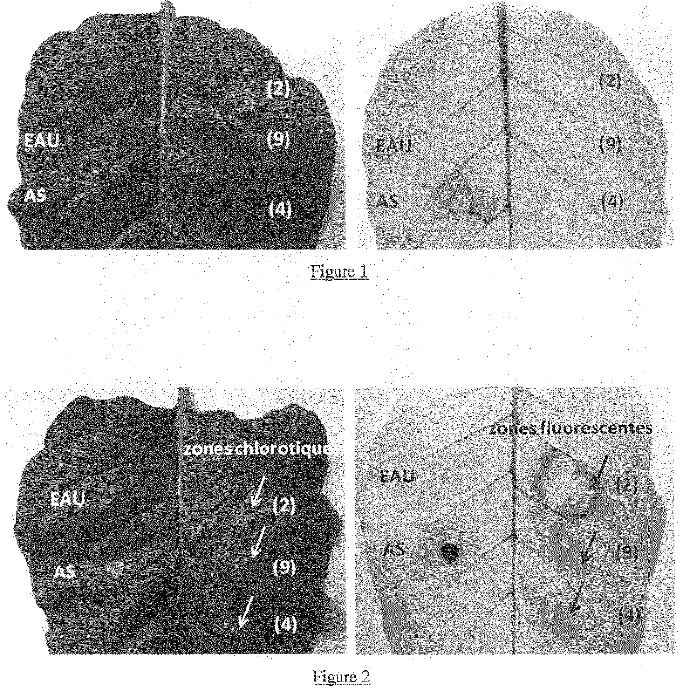

Les Exemples sont illustrés par les Figures 1 à 5.
La Figure 1 représente deux photographies d'une feuille de tabac sous lumière blanche (à gauche) et Ultraviolet (longueur d'onde de 312 nm) (à droite), juste après l'infiltration de compositions comprenant différents extraits préparés selon l'Exemple 1 (extraits 2, 4 et 9), de l'eau ultrapure (EAU) et de l'acide salicylique (AS).
La Figure 2 représente deux photographies d'une feuille de tabac sous lumière blanche (à gauche) et Ultraviolet (longueur d'onde de 312 nm) (à droite), 4 jours après l'infiltration des compositions comprenant différents extraits préparés selon l'Exemple 1 (extraits 2, 4 et 9), de l'eau ultrapure (EAU) et de l'acide salicylique (AS).

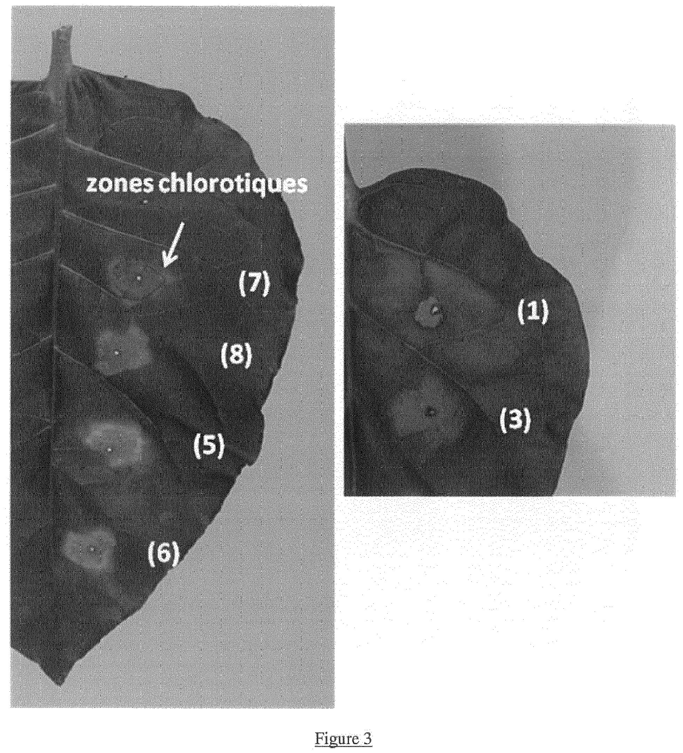

La Figure 3 représente deux photographies d'une feuille de tabac sous lumière blanche, 4 jours après l'infiltration des compositions comprenant différents extraits préparés selon l'Exemple 1 (extraits 1, 3, 5, 6, 7 et 8).

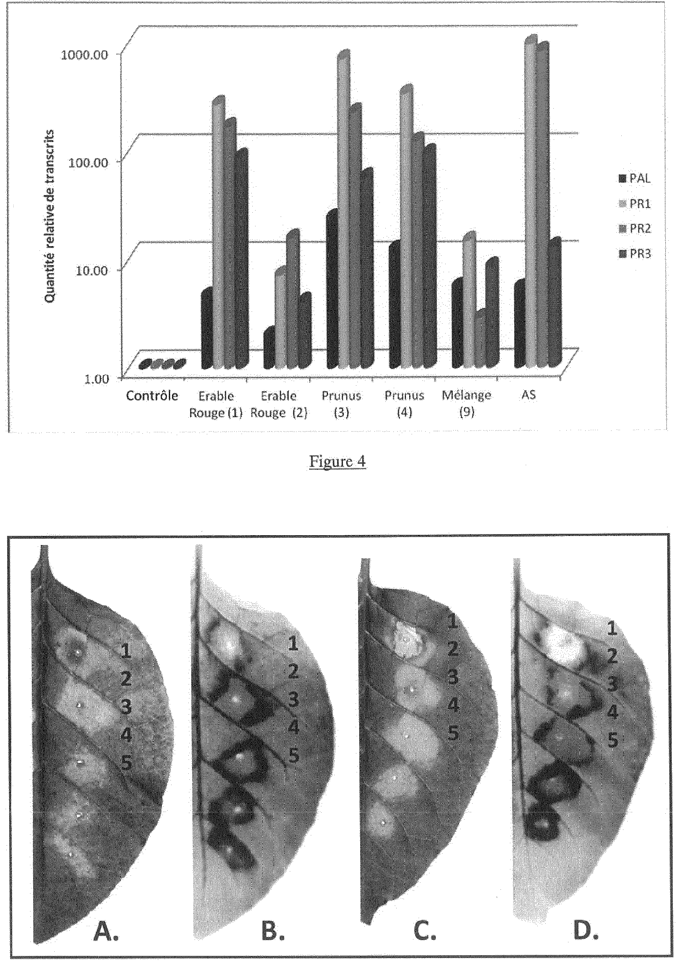

La Figure 4 est un graphique présentant l'accumulation des transcrits codant les gènes liés aux réactions de défense des plantes (PAL, PR1, PR2 et PR3), 4 jours après l'infiltration des compositions comprenant différents extraits préparés selon l'Exemple 1 (extraits 1, 2, 3, 4 et 9), de l'acide salicylique (AS) et de l'eau ultrapure (contrôle).
La Figure 5 représente quatre photographies de feuilles de tabac sous lumière blanche (A et C) et lumière Ultraviolet (longueur d'onde de 312nm) (B et D)), 4 jours après l'infiltration des compositions comprenant des extraits obtenus avec de l'eau bisulfitée (A et B) ou de l'éthanol à 30% (C et D) et ayant différentes teneurs en polyphénols.

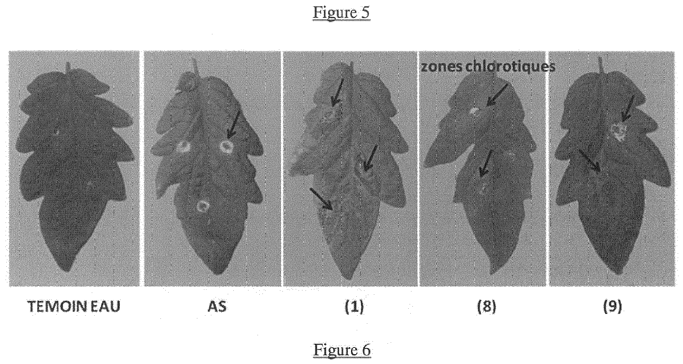

La Figure 6 représente cinq photographies de feuilles de tomate sous lumière blanche, 4 jours après l'infiltration des compositions comprenant différents extraits (extraits 1, 8 et 9), de l'eau ultrapure (TEMOIN EAU) et de l'acide salicylique (AS).

### Exemple 1 : Synthèse et caractérisation d'extraits de feuilles caduques de plante ligneuse à port arborescent

### Récolte

Quatre plantes ligneuses à port arborescent ont été utilisées comme sources de feuilles caduques pour obtenir neuf extraits différents. Les feuilles caduques ont été collectées en Août ou en Novembre, avant ou après abscission. Celles collectées en Août ne présentent pas les symptômes de la senescence foliaire, tandis que celles collectées en Novembre présentent ces symptômes avec des couleurs automnales. Le Tableau 1 répertorie les provenances des feuilles caduques utilisées.

**Tableau 1 : Provenances des feuilles caduques utilisées**

| Extrait n° | 1 | 2 | 3 | 4 | 5 | 6 | 7 | 8 | 9 |
|---|---|---|---|---|---|---|---|---|---|
| Plante ligneuse à port arborescent | Erable rouge | | Prunus | | Platane | | Chêne rouge | | Mélange de feuilles sénescentes |
| Période de collecte | Août av. abs. | Nov. av. abs | Août av. abs. | Nov. av. abs | Nov. av. abs | Nov. ap. abs | Nov. av. abs | Nov. ap. abs | Nov. ap. abs |

| | | | | | | | | | |
|---|---|---|---|---|---|---|---|---|---|
| Nov. : Novembre; av. abs. : avant abscission;ap. abs. : après abscission | | | | | | | | | |

### Obtention d'un extrait

Après avoir été récoltées, les feuilles sont pulvérisées dans l'azote liquide. L'extraction est réalisée sur 5 g de feuilles pulvérisées avec 25 mL de solvant hydroalcoolique légèrement acidifié (80 % éthanol et 0,5 % HCl à 0,1N). Une fois l'extraction réalisée, l'homogénat est conservé à -20°C pendant 1h et le surnageant est récupéré par centrifugation à 500 xg à 4°C. Après 2 extractions consécutives, l'extrait est lyophilisé pour retirer le solvant.

### Détermination de la teneur en polyphénols et en anthocyanes des extraits

La teneur totale en polyphénols a été déterminée par colorimétrie en utilisant le réactif de Folin-Ciocalteu, et la méthode décrite par Emmons et Peterson (Crop. Sci., 2001, 41:1676-1681). La teneur totale en anthocyanes a été déterminée par la méthode de pH différentielle décrite par Munoz-Espada et al. (J. Agr. Food. Chem., 2004, 52:6779-6786). Les teneurs totales en polyphénols et en anthocyanes sont reportées dans le Tableau 2.

**Tableau 2 : Teneur en polyphénols et anthocyanes dans les extraits**

| Extrait n° | 1 | 2 | 3 | 4 | 5 | 6 | 7 | 8 | 9 |
|---|---|---|---|---|---|---|---|---|---|
| Teneur Totale en Polyphénols (%*) | 33 | 23,6 | 16,5 | 21,3 | 11,4 | 17,2 | 20,8 | 14,8 | 36 |
| Teneur Totale en Anthocyanes (%**) | 0,06 | 0,23 | 1,08 | 0,01 | 0,01 | 0,01 | 0,14 | 0 | 0,16 |

| | | | | | | | | | |
|---|---|---|---|---|---|---|---|---|---|
| * en poids de polyphénols par rapport au poids sec de l'extrait. ** en poids d'anthocyanes par rapport au poids sec de l'extrait. | | | | | | | | | |

Les résultats indiquent que les extraits ont des teneurs totales en polyphénols entre 10 et 40 % par rapport au poids sec de l'extrait et des teneurs totales en anthocyanes inférieures à 1,1 % en poids d'anthocyanes par rapport au poids sec de l'extrait.

### Exemple 2: Effet éliciteur sur feuilles de tabac

Les expériences sont réalisées sur des feuilles de tabac provenant de plants de tabac, au stade 10-12 feuilles (3 mois), cultivés sous serre dans des conditions contrôlées (22±5°C avec une photopériode de 16h de lumière).

L'activité élicitrice des neuf extraits obtenus dans l'Exemple 1 est étudiée. Neuf compositions comprenant 1% d'extrait par rapport au poids sec de l'extrait, sont obtenues en dissolvant les neufs extraits dans de l'eau ultrapure. Chaque composition est conservée à 4°C avant son utilisation.

### Symptômes macroscopiques

On infiltre 50 µl des compositions précédentes dans les feuilles de tabac jusqu'à ce que la composition soit étendue sur une surface de 1 à 2 cm². On réalise un témoin positif avec de l'acide salicylique (2mM) qui est un éliciteur connu. Un témoin négatif est réalisé avec de l'eau ultrapure.

### Résultats

On voit sur les photographies des Figures 1, 2 et 3 que l'infiltration induit une chlorose (zone claire dépourvue de chlorophylle) des tissus infiltrés avec l'apparition de nécrose (zone brune desséchée). Elle induit également une accumulation locale de composés fluorescents suggérant une accumulation de composés phénoliques antimicrobiens, caractéristique de la LAR « Local Acquired Résistance » intervenant dans les réactions de défense des végétaux.

### Expression des gènes liés aux réactions de défense des plantes.

L'activité élicitrice des extraits a été démontrée au niveau moléculaire par l'analyse de l'expression de gènes liés aux réactions de défense des plantes PAL, PR1, PR2 et PR3.

L'analyse moléculaire a consisté à extraire les ARN totaux à partir des feuilles de tabac, infiltrées depuis quatre jours, en utilisant le kit d'extraction Tri-reagent (Euromedex) et en respectant les instructions du fabricant. La reverse transcriptase a été réalisée sur 1 µg des ARN totaux en utilisant le (RT) Euroscript (Eurogentec) et en respectant les instructions du fabricant.

Les fragments de RT-PCR spécifiques de PAL, PR1, PR2 et PR3 sont quantifiés en utilisant le logiciel iQv3 (BIO-RAD). L'abondance des transcrits PAL, PR1, PR2 et PR3 est normalisée (Quantité Relative) à ceux d'un gène d'expression constitutive, codant l'actine ou le facteur d'élongation alpha.

### Résultats

La Figure 4 montre que l'accumulation des gènes est plus importante dans les feuilles infiltrées avec les compositions comprenant les extraits 1, 2, 3, 4 et 9 qu'avec de l'eau ultrapure. Toutes les compositions testées induisent une importante accumulation des transcrits codant les gènes de défense. L'accumulation des gènes de défense dans les feuilles infiltrées avec la composition comprenant l'extrait 3 est du même ordre de grandeur que pour les feuilles infiltrées avec de l'acide salicylique, qui est connu comme éliciteur.

Ces données démontrent l'effet éliciteur des extraits qui induisent une accumulation des gènes liés aux réactions de défense des plantes.

### Exemple 3: Impact du solvant sur l'effet éliciteur sur feuilles de tabac: symptômes macroscopiques

Les extraits testés sont obtenus à partir de feuilles d'érable rouge collectées au mois de novembre avant abscission.

Le procédé d'extraction est identique à celui de l'Exemple 1 mais le solvant utilisé est soit de l'eau bisulfitée soit de l'éthanol à 30%.

Le test réalisé pour l'étude des symptômes macroscopique est identique à celui de l'Exemple 2.

L'infiltration d'extraits d'érable rouge issus de l'extraction à l'eau bisulfitée (photographies A et B de la Figure 5) ou à l'éthanol à 30% (photographies C et D de la Figure 5) comprenant 0.19% de polyphénols (1), dilué deux fois (2), quatre fois (3), huit fois (4) et seize fois (5) conduit à la formation de chloroses comme le montrent les photographies A et C de la Figure 5.

Les photographies B et D de la Figure 5 montrent que la formation de chloroses est accompagnée de la formation de composés fluorescents. Ces phénomènes témoignent de la mise en place de réactions de défenses.

Les deux solvants utilisés pour l'extraction des polyphénols sont donc adaptés pour extraire les biomolécules actives déclenchant la réponse de type HR (hypersensible).

### Exemple 4 : Effet éliciteur sur feuilles de tomates

Les expériences sont réalisées sur des feuilles de tomate provenant de plants de tomate âgés de 6 semaines, au stade 5-6 feuilles, cultivés sous serre dans des conditions contrôlées (22±5°C avec une photopériode de 16h de lumière).

L'activité élicitrice des extraits obtenus dans l'exemple 1 est étudiée. Trois compositions comprenant 0,25% d'extrait par rapport au poids sec de l'extrait, sont obtenues en dissolvant les extraits dans de l'eau ultrapure. Chaque composition est conservée à 4°C avant son utilisation.

### Symptômes macroscopiques

On infiltre 50 µl des compositions comprenant les extraits 1, 8 et 9 dans les feuilles de tomate jusqu'à ce que la composition soit étendue sur une surface de 1 à 2 cm². On réalise un témoin positif avec de l'acide salicylique (2mM) qui est un éliciteur connu. Un témoin négatif est réalisé avec de l'eau ultrapure.

### Résultats

On voit sur les photographies de la Figure 6 que l'infiltration induit une chlorose (zone claire dépourvue de chlorophylle) des tissus infiltrés avec l'apparition de nécrose (zone brune desséchée) suggérant une réponse de type hypersensible caractéristique de la LAR « Local Acquired Résistance » intervenant dans les réactions de défense des végétaux.

### Exemple 5 : Traitement curatif contre un pathogène des feuilles de tabac par des extraits de feuilles caduques de plante ligneuse à port arborescent.

Des compositions identiques et des feuilles provenant des mêmes plants de tabac que dans l'Exemple 2 sont utilisées. Deux disques (10 cm de diamètre) sont découpés dans une même feuille, puis placé dans une boite de Pétri contenant une couche de 2% de gel d'agarose.

Le pathogène choisi pour l'étude est le *Phytophtora parasitica spp nicotianae* (Ppn) isolat 329. Le Ppn est cultivé sur Malt-Agar à 24°C. Pour la production de zoospores, le mycélium Ppn est cultivé pendant une semaine dans le milieu liquide V8 à 24°C sous des conditions lumineuses continues, macéré puis incubé pendant quatre jours dans une eau contenant 2% d'agar. Les zoospores sont relarguées grâce à un choc thermique consistant en 2 incubations, une première à 4°C pendant 20 min, une seconde à 37°C pendant 30 min après addition de 10 ml d'eau. Une suspension de zoospores dans l'eau (1 zoopore par microlitre) est préparée avant d'être inoculée.

Les compositions contenant les extraits (50 µl) sont infiltrées et les suspensions de zoospores (100 µl) sont inoculées, dans deux zones distinctes, distantes de 1 cm, du parenchyme foliaire de tabac. Des essais dans lesquels les compositions sont remplacées par de l'acide salicylique (témoin positif) ou de l'eau ultrapure (témoin négatif) sont réalisés. Trois jours après les infiltrations, l'aire de la zone d'infection est mesurée. Les mesures sont réalisées en utilisant des logiciels Optima et Photoshop pour Windows.

### Résultats

Les résultats sont regroupés dans le Tableau 3. Lors des essais avec les compositions contenant les extraits 7 et 8, l'aire de la zone d'infection est plus petite que celle de l'essai avec l'eau ultrapure, et du même ordre de grandeur que l'essai avec l'acide salicylique. Ces résultats mettent donc en évidence la capacité des extraits à réduire la zone d'infection du pathogène Ppn sur les feuilles de tabac. Le niveau de protection mesuré pour les extraits 7 et 8 est, respectivement, de 46% et 44% par rapport à l'eau ultrapure.

Ces données démontrent que les extraits de feuilles caduques de plante ligneuse à port arborescent peuvent être utilisés en traitement préventif ou curatif d'une plante contre un pathogène.

**Tableau 3**

| | Eau ultrapure | Acide salicylique | Extrait 7 | Extrait 8 |
|---|---|---|---|---|
| Aire de la zone d'infection (cm²) | 18,7±2,6 | 10,9±2,8 | 10,1±4 | 10,4±1,1 |

## Revendications

1. Procédé de valorisation de feuilles caduques de plante ligneuse à port arborescent comprenant les étapes de :
a) collecte des feuilles caduques de plante ligneuse à port arborescent, ladite plante ligneuse à port arborescent étant choisie dans le groupe consistant en l'acacia, le bouleau, le charme, le châtaignier, le chêne, l'érable, le frêne, le hêtre, le marronnier, le platane, le prunus, le saule, le sophora, et le peuplier,
b) extraction desdites feuilles par un solvant aqueux consistant en de l'eau bisulfitée dont la teneur en bisulfite est comprise entre 0,5 g/l et 2 g/l, ou un solvant hydroalcoolique comprenant plus de 25 % (v/v) d'éthanol, ledit solvant pouvant en outre contenir un acide en une teneur inférieure à 2,5 % (v/v), et
c) utilisation dudit extrait pour une application phytosanitaire consistant en l'élicitation d'une plante, ou le traitement préventif ou curatif d'une plante contre un agent pathogène.

2. Procédé selon la revendication 1, **caractérisé en ce que** les feuilles caduques de plante ligneuse à port arborescent sont récoltées avant abscission et/ou après abscission.

3. Procédé selon la revendication 1 ou 2, **caractérisé en ce que** l'acide précité est choisi dans le groupe consistant en l'acide chlorhydrique, l'acide nitrique, l'acide sulfurique, l'acide acétique et leur mélange.

4. Procédé selon l'une quelconque des revendications 1 à 3, **caractérisé en ce que** l'étape b) d'extraction est réalisée à l'aide d'un solvant hydroalcoolique comprenant 80% (v/v) d'éthanol et 0,5% (v/v) d'acide chlorhydrique à 0.1N.

5. Procédé selon l'une quelconque des revendications 1 à 4, **caractérisé en ce que** l'étape b) d'extraction est réalisée à une température de 18°C à 25°C.

6. Utilisation d'un extrait de feuilles caduques de plante ligneuse à port arborescent obtenu par la mise en œuvre des étapes a) et b) du procédé selon l'une quelconque des revendications 1 à 5, pour une application phytosanitaire consistant en l'élicitation d'une plante, ou le traitement préventif ou curatif d'une plante contre un agent pathogène.

7. Procédé de traitement phytosanitaire d'une plante, qui comprend l'application d'une composition comprenant un extrait de feuilles caduques de plante ligneuse à port arborescent obtenu par la mise en œuvre des étapes a) et b) du procédé selon l'une quelconque des revendications 1 à 5, sur ladite plante, ledit traitement consistant en l'élicitation d'une plante, ou le traitement préventif ou curatif d'une plante contre un agent pathogène.

8. Procédé selon la revendication 7, **caractérisé en ce que** la composition est une composition aqueuse qui est appliquée par pulvérisation foliaire ou infiltration.

9. Procédé selon la revendication 8, **caractérisé en ce que** la concentration d'extrait de feuilles caduques de plante ligneuse à port arborescent dans la composition est comprise entre 0,001 et 5%, par rapport au poids sec de l'extrait.

10. Utilisation selon la revendication 6 ou procédé selon l'une quelconque des revendications 1 à 5 et 7 à 9 **caractérisé en ce que** l'extrait de feuilles caduques de plante ligneuse à port arborescent comprend moins de 45%, de préférence de 5% à 40 % en poids de polyphénols par rapport au poids sec de l'extrait.

## Patentansprüche

1. Verfahren zur Wiederverwendung von sommergrünen Blättern einer baumartigen, hölzernen Pflanze, welches die Schritte umfasst des:
a) Sammelns von sommergrünen Blättern einer baumartigen, hölzernen Pflanze, wobei die baumartige, hölzerne Pflanze aus der Gruppe ausgewählt ist, die aus Akazie, Birke, Weißbuche, Edelkastanie, Eiche, Ahorn, Esche, Buche, Kastanie, Platane, Prunus, Weide, Sophora und Pappel besteht,
b) Extrahierens der Blätter durch ein wässriges Lösungsmittel, das aus Bisulfitwasser besteht, dessen Bisulfitgehalt zwischen 0,5 g/l und 2 g/l beträgt, oder ein hydroalkoholisches Lösungsmittel, das mehr als 25 Volumen-% Ethanol umfasst, wobei das Lösungsmittel ferner eine Säure mit einem Gehalt von weniger als 2,5 Volumen-% enthalten kann, und
c) Verwendens des Extrakts für eine Pflanzenschutzanwendung, die aus dem Behandeln einer Pflanze mit einem Elicitor oder der präventiven oder kurativen Behandlung einer Pflanze gegen ein pathogenes Mittel besteht.

2. Verfahren nach Anspruch 1, **dadurch gekennzeichnet, dass** die sommergrünen Blätter einer baumartigen, hölzernen Pflanze vor der Abszission und/oder nach der Abszission geerntet werden.

3. Verfahren nach Anspruch 1 oder 2, **dadurch gekennzeichnet, dass** die vorstehend genannte Säure aus der Gruppe ausgewählt ist, die aus Salzsäure, Salpetersäure, Schwefelsäure, Essigsäure und einer Mischung davon besteht.

4. Verfahren nach einem der Ansprüche 1 bis 3, **dadurch gekennzeichnet, dass** der Schritt b) des Extrahierens mit Hilfe eines hydroalkoholischen Lösungsmittels umgesetzt wird, das 80 Volumen-% Ethanol und 0,5 Volumen-% Salzsäure bei 0,1 N umfasst.

5. Verfahren nach einem der Ansprüche 1 bis 4, **dadurch gekennzeichnet, dass** der Schritt b) des Extrahierens bei einer Temperatur von 18 °C bis 25 °C umgesetzt wird.

6. Verwendung eines Extrakts aus sommergrünen Blättern einer baumartigen, hölzernen Pflanze, das durch die Umsetzung der Schritte a) und b) des Verfahrens nach einem der Ansprüche 1 bis 5 erhalten wird, für eine Pflanzenschutzanwendung, die aus dem Behandeln einer Pflanze mit einem Elicitor oder der präventiven oder kurativen Behandlung einer Pflanze gegen ein pathogenes Mittel besteht.

7. Verfahren zur Pflanzenschutzbehandlung einer Pflanze, welches das Auftragen einer Zusammensetzung, die ein Extrakt aus sommergrünen Blättern einer baumartigen, hölzernen Pflanze umfasst, das durch die Umsetzung der Schritte a) und b) des Verfahrens nach einem der Ansprüche 1 bis 5 erhalten wird, auf die Pflanze umfasst, wobei die Behandlung aus dem Behandeln einer Pflanze mit einem Elicitor oder der präventiven oder kurativen Behandlung einer Pflanze gegen ein pathogenes Mittel besteht.

8. Verfahren nach Anspruch 7, **dadurch gekennzeichnet, dass** die Zusammensetzung eine wässrige Zusammensetzung ist, die durch Besprühen oder Infiltration aufgetragen wird.

9. Verfahren nach Anspruch 8, **dadurch gekennzeichnet, dass** die Konzentration des Extrakts aus sommergrünen Blättern einer baumartigen, hölzernen Pflanze in der Zusammenfassung zwischen 0,001 und 5 % in Bezug auf das Trockengewicht des Extrakts beträgt.

10. Verwendung nach Anspruch 6 oder Verfahren nach einem der Ansprüche 1 bis 5 und 7 bis 9, **dadurch gekennzeichnet, dass** das Extrakt aus sommergrünen Blättern einer baumartigen, hölzernen Pflanze mindestens 45 Gewichts-%, bevorzugt 5 Gewichts-% bis 40 Gewichts-% an Polyphenolen in Bezug auf das Trockengewicht des Extrakts umfasst.

## Claims

1. Method for reusing the deciduous leaves of arborescent woody plants, comprising the steps of:
a) collecting deciduous leaves of arborescent woody plants, said arborescent woody plant being selected from the group consisting of acacia, birch, hornbeam, chestnut, oak, maple, ash, beech, horse chestnut, platanus, prunus, willow, sophora, and poplar,
b) extracting from said leaves by means of an aqueous solvent consisting of bisulfite in water, where the bisulfite content is between 0.5 g/l and 2 g/l, or a hydroalcoholic solvent comprising more than 25% of ethanol (v/v), wherein said solvent may further contain an acid in a content of less than 2.5% (v / v), and
c) using said extract for a phytosanitary application consisting of elicitation of a plant, or preventive or curative treatment of a plant against a pathogen.

2. Method according to claim 1, **characterized in that** the deciduous leaves of arborescent woody plants are harvested before abscission and/or after abscission.

3. Method according to claim 1 or 2, **characterized in that** the aforementioned acid is selected from the group consisting of hydrochloric acid, nitric acid, sulfuric acid, acetic acid and mixtures thereof.

4. Method according to any one of claims 1 to 3, **characterized in that** the extraction step b) is carried out using a hydroalcoholic solvent comprising 80% (v/v) ethanol and 0 5% (v/v) 0.1N hydrochloric acid.

5. Method according to any one of claims 1 to 4, **characterized in that** the extraction step b) is carried out at a temperature of 18 ° C to 25 ° C.

6. Use of an extract of deciduous leaves of arborescent woody plant obtained by the implementation of steps a) and b) of the method according to any one of claims 1 to 5, for a phytosanitary application consisting of elicitation of a plant, or the preventive or curative treatment of a plant against a pathogen.

7. A method of phytosanitary treatment of a plant, which comprises the application of a composition comprising an extract from deciduous leaves of arborescent woody plants obtained by the implementation of steps a) and b) of the method according to any one of Claims 1 to 5, onto said plant, said treatment consisting of elicitation of a plant, or preventive or curative treatment of a plant against a pathogen.

8. Method according to claim 7, wherein the composition is an aqueous composition which is applied by foliar spraying or infiltration.

9. Method according to claim 8, wherein the concentration of extract from deciduous leaves of arborescent woody plants in the composition is between 0.001 and 5%, relative to the dry weight of the extract.

10. Use according to claim 6 or method according to any one of claims 1 to 5 and 7 to 9, wherein the extract from deciduous leaves of arborescent woody plants comprises less than 45%, preferably between 5% and 40% polyphenols by weight relative to the dry weight of the extract.
